# EUROPEAN PATENT APPLICATION

(11) **EP 4 787 957 A1**
(43) Date of publication of application: **05.08.2026**
(21) Application number: 23953834.1
(22) Date of filing: 28.09.2023
(51) Int. Cl.: H04W 36/00

(54) **INFORMATION RECEIVING/SENDING METHOD AND APPARATUS**

(71) Applicant: 1FINITY INC., Kawasaki-shi, Kanagawa 211-8588 (JP)
(72) Inventor: HAN, Chao, Beijing 100022 (CN); JIA, Meiyi, Beijing 100022 (CN)
(74) Representative: Haseltine Lake Kempner LLP
(86) International application number: PCT/CN2023/123004
(87) International publication number: WO 2025/065690

(57) **Abstract**

The embodiments of this disclosure provide an information transceiving method and an apparatus therefor. The information transceiving method includes: transmitting first signaling to a candidate cell, wherein the first signaling is used to request the candidate cell to transmit second signaling, and/or to notify the candidate cell of TA-related (Timing Advance-related) information or indicate TA-related information to the candidate cell.

## Description

### Field

This disclosure relates to the field of wireless communication technology.

### Background

The 3rd Generation Partnership Project (3GPP) conducts in-depth discussions and studies on mobility-related service enhancements in Release 18. Mobility management provides seamless connectivity for a terminal equipment and ensures service continuity, and accordingly, traffic of an ongoing communication session may be transferred from one cell to another cell when a terminal location or a channel environment changes. A conventional serving cell change procedure is triggered by Layer 3 (L3) measurements and implemented by Radio Resource Control (RRC) signaling. Release 18 introduces L1/L2-based (layer 1/layer 2-based) mobility management, where a mobility service triggered by a lower layer, i.e., L1/L2-Triggered Mobility (LTM), change a serving cell by using L1/L2 signaling.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

The inventors find that, before triggering an LTM-based cell switch, a network side determines a candidate target cell for a terminal equipment according to an L1 measurement result reported by the terminal equipment, and the terminal equipment obtains a Timing Advance (TA) between the terminal equipment and the candidate target cell by triggering an early random access (Early RACH) procedure. 3GPP Release 18 discusses and reaches an agreement that an Early RACH procedure does not include a Random Access Response (RAR) message, while a conventional RACH procedure includes the RAR message, and the network side transmits TA information to the terminal equipment by using the RAR message. Accordingly, the terminal equipment does not obtain a corresponding timing advance (TA) from a target cell during the Early RACH procedure, and does not maintain the TA of the candidate target cell.

The candidate target cell notifies a serving cell of the terminal equipment of a TA between the candidate target cell and the terminal equipment, and the serving cell maintains the TA of the candidate target cell and a time alignment timer (TAT) corresponding to the TA. When triggering an LTM procedure, if a TA of a target cell maintained by a network side is valid, the serving cell configures TA information in a MAC CE for cell switch and transmit the MAC CE to the terminal equipment, and the terminal equipment performs RACH-Less or RACH-Based LTM according to the TA configuration in the MAC CE. Before the terminal equipment receives the MAC CE for cell switch, the terminal equipment fails to obtain the TA information of the target cell.

In the LTM procedure, the serving cell is to maintain the TA and a remaining valid time (TAT) between one or more candidate target cells and the terminal equipment to be switched. When triggering an LTM switch, the serving cell configures a MAC CE according to the maintained TAT. If the TAT does not expire, the TA of the target cell is considered valid, and the serving cell configures the TA information in the MAC CE and transmits the MAC CE to the terminal equipment. If the MAC CE indicates that TA = 0 or the TA is consistent with the TA of the target cell maintained by the serving cell, the terminal equipment performs a RACH-Less mode switch, i.e., directly performs a first uplink transmission on allocated time-frequency resources of the target cell. After receiving the first uplink transmission from the terminal equipment, the target cell considers that the LTM procedure is completed. During an entire execution process of the LTM switch, no an additional RACH procedure is performed between the terminal equipment and the target cell, and no a new TA is acquired. During this period, no TA information between the terminal equipment and the target cell is maintained. Because the TA information of the candidate target cell is maintained by the serving cell, and the serving cell and the candidate target cell may belong to different Distributed Units (DUs), a communication delay between the two cells causes the TAT to take effect in the serving cell with a delay, thereby causing the serving cell to erroneously determine validity of the TA. When the TA notified by the candidate target cell to the serving cell has expired, the serving cell still considers that the TA is valid and configures the TA in the MAC CE for triggering an LTM switch, causing the terminal equipment to decide to perform a RACH-Less cell switch accordingly.

In addition, after the serving cell transmits a MAC CE command to the terminal equipment to trigger an LTM cell switch, the serving cell no longer continues to maintain a TA between the terminal equipment and the target cell. During execution of a RACH-Less LTM, a TAT (Time Alignment Timer) may have expired, but neither the target cell nor a source cell maintains the information, and therefore a corresponding TA update acquisition procedure is not actively triggered, eventually leading to problems such as radio link failure.

Furthermore, according to a discussion on RACH-Less LTM in 3GPP Release 18, after the terminal equipment transmits first uplink data on a CG or DG of the target cell according to an indication of the MAC CE, and a network successfully receives the uplink data, the network needs to schedule a new transmission for the terminal equipment, for the terminal equipment to confirm completion of the LTM cell switch, wherein a PDCCH used for scheduling the new transmission addresses the terminal equipment by using a C-RNTI of the terminal equipment in the target cell. After the terminal equipment successfully receives the new transmission scheduled by the target cell according to the first uplink data of the terminal equipment, the terminal equipment considers the LTM procedure completed. However, content indicated by the new transmission transmitted by the network is not yet determined.

To address at least one of the aforementioned problems or other similar problems, embodiments of the present disclosure provide an information transceiving method and an apparatus therefor.

According to an aspect of the embodiments of this disclosure, there is provided an information transceiving method, applied to a serving cell of a terminal equipment, the method including:
transmitting first signaling to a candidate cell,
the first signaling being used to request the candidate cell to transmit second signaling, and/or to notify the candidate cell of TA-related (Timing Advance-related) information or indicate TA-related information to the candidate cell.

Content carried by the first signaling includes:
- an indication for requesting the second signaling; and/or
- a first time of a first TAT (Time Alignment Timer); and/or
- an initial value of a second TAT (Time Alignment Timer); and/or
- a configuration of a second time of a second TAT (Timing Alignment Timer); and/or
- a timing advance (TA); and/or
- a difference being an offset between a configuration of the second time and the first time,
wherein the first TAT is maintained by the serving cell, the first time is a remaining time of the first TAT or an elapsed time of the first TAT, the second TAT is maintained by the candidate cell, the second time is a remaining time of the second TAT or an elapsed time of the second TAT, and the timing advance is a timing advance of the terminal equipment relative to the candidate cell.

According to another aspect of the embodiments of this disclosure, there is provided an information transceiving method, applied to a candidate cell of a terminal equipment, the method including:
receiving first signaling transmitted by a serving cell of the terminal equipment,
the first signaling being used to request the candidate cell to transmit second signaling, and/or to notify the candidate cell of TA-related (Timing Advance-related) information or indicate TA-related information to the candidate cell.

Content carried by the first signaling includes:
- an indication for requesting the second signaling; and/or
- a first time of a first TAT (Time Alignment Timer); and/or
- an initial value of a second TAT (Time Alignment Timer); and/or
- a configuration of a second time of a second TAT (Timing Alignment Timer); and/or
- a timing advance (TA); and/or
- a difference being an offset between a configuration of the second time and the first time,
wherein the first TAT is maintained by the serving cell, the first time is a remaining time of the first TAT or an elapsed time of the first TAT, the second TAT is maintained by the candidate cell, the second time is a remaining time of the second TAT or an elapsed time of the second TAT, and the timing advance is a timing advance of the terminal equipment relative to the candidate cell.

According to still another aspect of the embodiments of this disclosure, there is provided an information transceiving method, applied to a target cell of LTM (Layer1/Layer2 Triggered Mobility) cell switch, the method including:
receiving first uplink data transmitted by a terminal equipment on configured time-frequency resources of the target cell during RACH-Less LTM cell switch; and
transmitting a new transmission to the terminal equipment according to the first uplink data, the new transmission indicating a latest timing advance (TA) between the target cell and the terminal equipment.

According to yet another aspect of the embodiments of this disclosure, there is provided an information transceiving apparatus, applied to a serving cell of a terminal equipment, the apparatus including:
a first transmitting unit configured to transmit first signaling to a candidate cell,
the first signaling being used to request the candidate cell to transmit second signaling, and/or to notify the candidate cell of TA-related (Timing Advance-related) information or indicate TA-related information to the candidate cell.

According to yet still another aspect of the embodiments of this disclosure, there is provided an information transceiving apparatus, applied to a candidate cell of a terminal equipment, the apparatus including:
a first receiving unit configured to receive first signaling transmitted by a serving cell of the terminal equipment,
the first signaling being used to request the candidate cell to transmit second signaling, and/or to notify the candidate cell of TA-related (Timing Advance-related) information or indicate TA-related information to the candidate cell.

According to yet still another aspect of the embodiments of this disclosure, there is provided an information transceiving apparatus, applied to a target cell of LTM (Layer1/Layer2 Triggered Mobility) cell switch, the apparatus including:
a second receiving unit configured to receive first uplink data transmitted by a terminal equipment on configured time-frequency resources of the target cell during RACH-Less LTM cell switch; and
a second transmitting unit configured to transmit a new transmission to the terminal equipment according to the first uplink data, the new transmission indicating a latest timing advance (TA) between the target cell and the terminal equipment.

One of advantages of embodiments of this disclosure exists in that, through transmitting, by a serving cell of a terminal equipment, to a candidate cell a request message, and/or a notification/indication message, the serving cell and/or a target cell are/is enabled to timely and effectively maintain a TA between the terminal equipment and the target cell, thereby avoiding a problem of delayed taking effect caused by inter-cell communication delay (a problem of erroneous determination on TA validity by the serving cell), and in addition, by maintaining the TA, avoiding a problem such as radio link failure that may occur during execution of a RACH-Less LTM.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.

The drawings are included to provide further understanding of this disclosure, which constitute a part of the specification and illustrate the embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is a schematic diagram of a communication system according to embodiments of this disclosure;
FIG. 2 is a schematic diagram of LTM cell switch according to embodiments of this disclosure;
FIG. 3 is a schematic diagram of an information transceiving method according to embodiments of this disclosure;
FIG. 4 is another schematic diagram of an information transceiving method according to embodiments of this disclosure;
FIG. 5 is another schematic diagram of an information transceiving method according to embodiments of this disclosure;
FIG. 6 is a schematic diagram of signaling according to embodiments of this disclosure;
FIG. 7 is another schematic diagram of signaling according to embodiments of this disclosure;
FIG. 8 is another schematic diagram of signaling according to embodiments of this disclosure;
FIG. 9 is another schematic diagram of an information transceiving method according to embodiments of this disclosure;
FIG. 10 is another schematic diagram of an information transceiving method according to embodiments of this disclosure;
FIG. 11 is another schematic diagram of an information transceiving method according to embodiments of this disclosure;
FIG. 12 is a schematic diagram of an information transceiving apparatus according to embodiments of this disclosure;
FIG. 13 is another schematic diagram of an information transceiving apparatus according to embodiments of this disclosure;
FIG. 14 is another schematic diagram of an information transceiving apparatus according to embodiments of this disclosure;
FIG. 15 is another schematic diagram of an information transceiving apparatus according to embodiments of this disclosure; and
FIG. 16 is a schematic diagram of a network device according to embodiments of this disclosure.

### Detailed Description of the Disclosure

These and further aspects and features of this disclosure will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the terms of the appended claims. Various embodiments of this application are described below with reference to the accompanying drawings. These embodiments are merely exemplary, and are not limitations on this application.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a/an", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In embodiments of this disclosure, the term "communications network" or "wireless communications network" may refer to a network satisfying any one of the following communication standards: long term evolution (LTE), long term evolution-advanced (LTE-A), wideband code division multiple access (WCDMA), and high-speed packet access (HSPA), etc.

And communications between devices in a communications system may be performed according to communication protocols at any stage, which may, for example, include but not limited to the following communication protocols: 1G (generation), 2G, 2.5G, 2.75G, 3G, 4G, 4.5G, 5G, new radio (NR), and 6G in the future, and/or other communication protocols that are currently known or will be developed in the future.

In embodiments of this disclosure, the term "network device", for example, refers to an equipment in a communication system that accesses a terminal equipment to the communications network and provides services for the terminal equipment. The network device may include but not limited to the following equipment: a base station (BS), an access point (AP), a transmission reception point (TRP), a broadcast transmitter, a mobile management entity (MME), a gateway, a server, a radio network controller (RNC), a base station controller (BSC).

A Base station may include but not limited to a node B (NodeB or NB), an evolved node B (eNodeB or eNB), and a 5G base station (gNB). Furthermore, it may include a remote radio head (RRH), a remote radio unit (RRU), a relay, or a low-power node (such as a femto, and a pico). The term "base station" may include some or all of its functions, and each base station may provide communications coverage for a specific geographical area. And a term "cell" may refer to a base station and/or its coverage area, which depends on a context of the term.

In embodiments of this disclosure, the term "user equipment (UE)" or "terminal equipment (TE)" refers to, for example, equipment accessing to a communication network and receiving network services via a network device. The user equipment may be fixed or mobile, and may also be referred to as a mobile station (MS), a terminal, a subscriber station (SS), an access terminal (AT), or a station, etc.

User equipment may include but not limited to the following devices: a cellular phone, a personal digital assistant (PDA), a wireless modem, a wireless communications device, a handheld device, a machine-type communications device, a lap-top, a cordless telephone, a smart cell phone, a smart watch, and a digital camera.

For another example, in a scenario such as an Internet of Things (IoT), etc., the user equipment may also be a machine or a device performing monitoring or measurement. For example, it may include but not limited to a machine-type communications (MTC) terminal, a vehicle mounted communication terminal, a device to device (D2D) terminal, a machine to machine (M2M) terminal, and a terminal supporting sidelink communication.

Moreover, the term "network side" or "network device side" refers to a side of a network, which may be a base station, and may include one or more network devices described above. The term "user side" or "terminal side" or "terminal equipment side" refers to a side of a user or a terminal, which may be a UE, and may include one or more terminal equipments described above. Unless otherwise specified in this disclosure, "device" may refer to a network device or a terminal equipment.

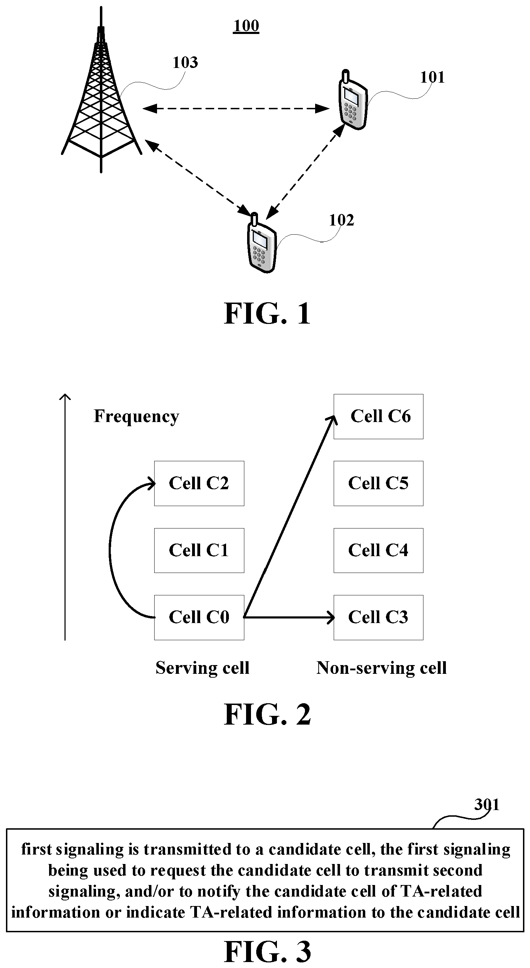

FIG. 1 is a schematic diagram of a communications system according to embodiments of this disclosure, in which a case where terminal equipments and a network device are taken as examples is schematically shown. As shown in FIG. 1, a communications system 100 may include a network device 101 and terminal equipments 102, 103. For the sake of simplicity, an example having only two terminal equipments and one network device is schematically given in FIG. 1; however, the embodiments of this disclosure is not limited thereto.

In embodiments of this disclosure, existing services or services that may be implemented in the future may be performed between the network device 101 and the terminal equipments 102, 103 or between the terminal equipments 102, 103. For example, such services may include but not limited to an enhanced mobile broadband (eMBB), massive machine type communication (MTC), and ultra-reliable and low-latency communication (URLLC).

The terminal equipment 102 may transmit data to the network device 101, for example, by using a granted or grant-free transmission mode. The network device 101 may receive data transmitted by one or more terminal equipments 102, and transmit feedback information to the terminal equipment 102, for example, an acknowledgement (ACK) / a negative acknowledgement (NACK) message, where a HARQ-ACK may be replaced with a positive HARQ-ACK or an ACK. The terminal equipment 102 may, according to the feedback information, confirm ending a transmission procedure, or may further perform new data transmission, or may perform data retransmission.

It should be noted that FIG. 1 shows that the two terminal equipments 102 and 103 are both within a coverage of the network device 101, but this disclosure is not limited thereto. Two terminal equipments 102 and 103 may not be within the coverage of network device 101, or the terminal device 102 may be within the coverage of network device 101 and the terminal device 103 may be outside the coverage of network device 101.

Rel-18 investigates Layer 1/Layer 2 triggered mobility (L1/L2 Triggered Mobility, LTM). Rel-18 LTM includes at least the following basic steps: a terminal equipment is provided with a candidate cell configuration, and thereafter receives a cell switch command indicating a TCI state, switches to a target cell according to the cell switch command, and applies the indicated TCI state on the target cell.

FIG. 2 is a schematic diagram of LTM cell switch according to embodiments of this disclosure. As shown in Fig. 2, cell C0, cell C1 and cell C2 belong to a serving cell. For example, cell C0, cell C1 and cell C2 form a group of cells for carrier aggregation, cell C0 is a Primary cell (PCell), and cell C1 and cell C2 are Secondary cells (SCell). For example, the serving cell is at least one of the following: a Special Cell (SpCell), an SCell, an active cell, or an inactive cell. Cell C3, cell C4, cell C5 and cell C6 belong to a non-serving cell. For example, cell C3, cell C4, cell C5 and cell C6 form a group of cells for carrier aggregation, cell C3 is a PCell, and cell C4, cell C5 and cell C6 are SCells.

Currently, Rel-18 LTM supports switching from a cell (for example, cell C0) to a serving cell, an intra-frequency cell and an inter-frequency cell. For example, cell C0 may switch to cell C2 (serving cell), cell C3 (intra-frequency cell) or cell C6 (inter-frequency cell). For example, a cell to which terminal equipment may be switched is referred to as a candidate cell, or a candidate target cell, and a cell to which terminal equipment is actually switched is referred to as a target cell. The terminal equipment may be switched to one or more target cells, for example, from a group of serving cells for carrier aggregation (cell C0, cell C1, cell C2) to a group of non-serving cells for carrier aggregation (cell C3, cell C4, cell C5, cell C6). In addition, a cell may be replaced with a carrier or a Component Carrier (CC).

In the following description, unless otherwise specified, a serving cell refers to a cell that provides service for a terminal equipment before cell switching, and a serving cell may be replaced with a source cell. If a cell switch command indicates that a terminal equipment is to be switched to a candidate cell, the candidate cell is also referred to as a target cell.

To address at least one of the above problems, embodiments of this disclosure provide an information transceiving method and an apparatus therefor. The embodiments of the present application are described in detail below with reference to the accompanying drawings.

### Embodiments of a first aspect

FIG. 3 is a schematic diagram of an information transceiving method according to embodiments of this disclosure. As shown in Fig. 3, the method is applied to a serving cell of a terminal equipment, the method including:
301, first signaling is transmitted to a candidate cell, the first signaling being used to request the candidate cell to transmit second signaling, and/or to notify the candidate cell of TA-related (Timing Advance-related) information or indicate TA-related information to the candidate cell.

It should be noted that FIG. 3 only schematically illustrates embodiment of this disclosure; however, this disclosure is not limited thereto. For example, an execution order among operations may be adjusted appropriately, other operations may be added, some operations may be removed, and objects of the operations may be adjusted. And appropriate variants may be made by those skilled in the art according to the above contents, without being limited to what is contained in FIG. 3.

According to the above embodiments, through transmitting, by a serving cell of a terminal equipment, to a candidate cell a request message, and/or a notification/indication message, the serving cell and/or a target cell are/is enabled to timely and effectively maintain a TA between the terminal equipment and the target cell, thereby avoiding a problem of delayed taking effect caused by inter-cell communication delay (a problem of erroneous determination on TA validity by the serving cell), and in addition, by maintaining the TA, avoiding a problem such as radio link failure that may occur during execution of a RACH-Less LTM.

In some embodiments, in 301, the candidate cell is a cell to which terminal equipment (UE) may be switched, that is, a candidate target cell. The candidate cell may be determined by a serving cell of the UE. The specific process is as described above, and is not repeated here.

In some embodiments, the first signaling is used to request the candidate cell to transmit second signaling; the serving cell transmits the first signaling to the candidate cell, and the candidate cell feeds back the second signaling to the serving cell according to the first signaling. The first signaling may be existing information that enables the candidate cell to feed back the second signaling, for example, the first signaling is Early RACH resource request signaling, measurement resource request signaling, or the like. Alternatively, the first signaling may be separately defined information that instructs the candidate cell to feed back the second signaling. The first signaling may include no information or may include any information, and the second signaling fed back by the candidate cell may also include no information or may include any information. In this case, the first signaling only requests the candidate cell to feed back one signaling, without concern for content carried by the second signaling. Thus, when the first signaling is existing signaling that requests the candidate cell to feed back the second signaling, the serving cell may update (calibrate) a first time of a first TAT maintained locally by the serving cell according to a time difference between transmission and reception of the signaling. Meanwhile, impact on an existing signaling interaction procedure is small, signaling overhead may be reduced, and problems existing in the related art are solved.

In some embodiments, the first signaling is used to notify the candidate cell of TA-related information or indicate TA-related information to the candidate cell.

In some embodiments, content carried by the first signaling may be at least one of the following:
(11) an indication for requesting the second signaling;
(12) a first time of a first TAT (Time Alignment Timer); the first TAT is maintained by the serving cell, and the first time is a remaining time of the first TAT or an elapsed time of the first TAT;
(13) an initial value of a second TAT (Time Alignment Timer); the second TAT is maintained by the candidate cell;
(14) a configuration of a second time of a second TAT (Timing Alignment Timer); the second time is a remaining time of the second TAT or an elapsed time of the second TAT, and the configuration of the second time includes a value of the second time configured by the serving cell for the candidate cell.
(15) a Timing Advance (TA); the timing advance is a timing advance of the terminal equipment relative to the candidate cell; or
(16) a difference being an offset between a configuration of the second time and the first time.

Steps (12) to (16) above are TA-related information, or may also be referred to as TA information.

Each of the above pieces of information (11) to (16) is described separately below.

In some embodiments, for the above information (11), a serving cell transmits first signaling including an indication for requesting second signaling to a candidate cell, and the candidate cell transmits second signaling for the first signaling to the serving cell after receiving the first signaling.

For the above information (12), when the serving cell receives a TA in the above information (11), the serving cell starts a first TAT locally; a first time of the first TAT indicates a valid duration of the TA maintained locally by the serving cell. In a case that the first TAT does not expire, the serving cell considers the TA valid. When the serving cell transmits the first signaling to the candidate cell, the first signaling carries the first time of the first TAT. Content related to expiration of the first TAT is similar to the above content and is incorporated herein, and is not described repeatedly herein.

For the above information (13), as described above, an initial value of the second TAT is a value when the second TAT starts. As described above, the initial value may be 0 (corresponding to a case where the second TAT counts up) or a positive integer greater than 0 (corresponding to a case where the second TAT counts down).

For the above information (14), a second time of the second TAT is a valid duration of the TA in the above information (11) maintained locally by the candidate cell; and the serving cell calculates an offset between the configuration of the second time of the second TAT and the first time of the first TAT. The configuration of the second time is configured by the serving cell. The configuration of the second time is, for example, the first time of the first TAT maintained locally by the serving cell, or another value determined by the serving cell.

For the above information (15), a Timing Advance (TA) of the terminal equipment relative to the candidate cell is transmitted from the candidate cell to the serving cell during an early random access procedure. When the serving cell transmits first signaling to the candidate cell, the first signaling carries the TA.

For the above information (16), as described above, the serving cell configures a second time of the second TAT maintained locally by the candidate cell, that is, the configuration of the second time of the second TAT. The configuration of the second time may be the first time in the above information (12); alternatively, the configuration of the second time may be a value obtained by compensating the first time in the above information (12) according to a difference between the first time and the second time. For example, assuming the difference is a communication delay between the serving cell and the candidate cell estimated, calculated or stored by the serving cell, and assuming the first time is a remaining time of the first TAT, the serving cell subtracts the difference from the first time to obtain a value that is the compensated first time, namely the configuration of the second time. Assuming the first time is an elapsed time of the first TAT, the serving cell adds the difference to the first time to obtain a value that is the compensated first time, namely the configuration of the second time. It is assumed herein that timing modes of the serving cell and the candidate cell for the TAT are the same, that is, both count up or both count down.

In some embodiments, first signaling transmitted by the serving cell to the candidate cell may include one piece of the above information (11) to (16), or at least two pieces of the above information (11) to (16), which are not described individually herein.

In some embodiments, first signaling used to notify the candidate cell of TA-related information or to indicate the same to the candidate cell may be new signaling different from existing interaction signaling between the serving cell and the candidate cell. For example, the new signaling is time alignment information request signaling or TAT calibration signaling. The first time of the first TAT and the TA are carried in fields of existing signaling and transmitted to the candidate cell. The time alignment information request signaling or the TAT calibration signaling includes at least one piece of the above information (11) to (16), for example. The time alignment information request signaling or the TAT calibration signaling may include at least one piece of the above information (11) to (16) without including other information. For example, the time alignment information request signaling or the TAT calibration signaling may include the first time of the first TAT and/or Timing Advance (TA) without including other information. The time alignment information request signaling or the TAT calibration signaling may also include at least one piece of the above information (11) to (16) and other information. For example, the time alignment information request signaling or the TAT calibration signaling may include the first time of the first TAT and/or Timing Advance (TA) and other information. The other information may be arbitrary information, which is not limited in this application.

In some embodiments, during an early random access procedure, a candidate cell transmits a TA between the candidate cell and the terminal equipment, and a valid duration corresponding to the TA maintained locally by the candidate cell, to a serving cell. The serving cell starts to maintain the valid duration of the TA locally. The valid duration of the TA is related to a time of a TAT, and the serving cell maintains the TA by setting the TAT. For example, after receiving the TA, the serving cell starts a first TAT locally. A first time of the first TAT is the valid duration of the TA maintained locally by the serving cell. The first TAT may count up or count down. If the first TAT counts down, the first time is a remaining time of the first TAT. In this case, an initial value of the first TAT is, for example, a maximum valid duration corresponding to the TA, where the maximum valid duration is configured by a network or transmitted by the candidate cell. When the first time of the first TAT is 0 or less than 0, the first TAT is considered to expire. If the first TAT counts up, the first time is an elapsed time of the first TAT. In this case, an initial value of the first TAT may be 0. When the first time of the first TAT reaches or exceeds a preset threshold, the first TAT is considered to expire. The preset threshold is, for example, the maximum valid duration corresponding to the TA, where the maximum valid duration is configured by a network or transmitted by the candidate cell.

Similarly, the candidate cell starts a second TAT locally. A second time of the second TAT is a valid duration of the TA maintained locally by the candidate cell. The second TAT may count up or count down. If the second TAT counts down, the second time is a remaining time of the second TAT. In this case, an initial value of the second TAT is, for example, a maximum valid duration corresponding to the TA, where the maximum valid duration is configured by a network. When the second time of the second TAT is 0, the second TAT is considered to expire. If the second TAT counts up, the second time is an elapsed time of the second TAT. In this case, an initial value of the second TAT may be 0 or less than 0. When the second time of the second TAT reaches or exceeds a preset threshold, the second TAT is considered to expire. The preset threshold is, for example, the maximum valid duration corresponding to the TA, where the maximum valid duration is configured by a network.

Accordingly, the serving cell transmits first signaling to the candidate cell, where the first signaling carries the above information related to the TA of the terminal equipment relative to the candidate cell. The candidate cell can calculate update (calibration) information according to the first signaling and feed back the update (calibration) information to the serving cell by using second signaling, so that the serving cell updates (calibrates) the first time of the first TAT maintained locally by the serving cell according to the second signaling, which addresses the problem existing in the related art.

In some embodiments, the first signaling is used to request the candidate cell to feed back second signaling, and the first signaling is used to notify the candidate cell of TA-related (Timing Advance-related) information or indicate TA-related information to the candidate cell. The first signaling that notifies the candidate cell of TA-related information or indicates the TA-related information to the candidate cell may be existing interaction signaling between the serving cell and the candidate cell. For example, the existing interaction signaling is LTM switch preparation signaling or LTM cell switch notification signaling. In this case, the first time of the first TAT and the TA are carried in fields of existing signaling and transmitted to the candidate cell. The fields may be existing fields in the existing interaction signaling or new fields added in the existing interaction signaling, which is not limited in this application. The existing interaction signaling includes other existing information in addition to the first time of the first TAT and/or Timing Advance (TA). Therefore, original functions of the existing interaction signaling are not affected after the first time of the first TAT and/or Timing Advance (TA) are carried.

Alternatively, the first signaling that notifies the candidate cell of TA-related information or indicates the TA-related information to the candidate cell may be new signaling different from existing signaling. The new signaling requests the candidate cell to feed back second signaling, and carries at least the first time of the first TAT and/or the TA. The new signaling may include other information in addition to the first time of the first TAT and/or the TA, or include no other information, which is not limited in this application. Thus, original functions of the existing interaction signaling transmitted by the serving cell to the candidate cell are not affected.

Therefore, a serving cell of a terminal equipment enables the serving cell and/or a target cell to timely and effectively maintain a TA between the terminal equipment and the target cell by transmitting to the candidate cell first signaling that requests feedback of second signaling and includes TA information, thereby avoiding a problem of delayed taking effect caused by inter-cell communication delay (a problem of erroneous determination on TA validity by the serving cell), and in addition, by maintaining the TA, avoiding a problem such as radio link failure that may occur during execution of a RACH-Less LTM.

Accordingly, a serving cell of a terminal equipment transmits to a candidate cell a request message for requesting second signaling, and/or a notification or indication message regarding TA information, the serving cell and/or a target cell are/is enabled to timely and effectively maintain a TA between the terminal equipment and the target cell, thereby avoiding a problem of delayed taking effect caused by inter-cell communication delay (a problem of erroneous determination on TA validity by the serving cell), and in addition, by maintaining the TA, avoiding a problem such as radio link failure that may occur during execution of a RACH-Less LTM.

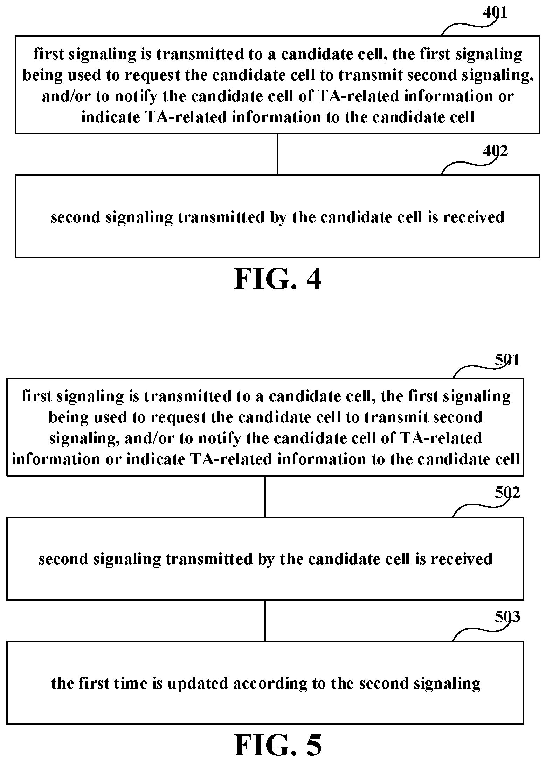

FIG. 4 is a schematic diagram of an information transceiving method according to embodiments of this disclosure. As shown in Fig. 4, the method is applied to a serving cell of a terminal equipment, the method including:
401, first signaling is transmitted to a candidate cell, the first signaling being used to request the candidate cell to transmit second signaling, and/or to notify the candidate cell of TA-related (Timing Advance-related) information or indicate TA-related information to the candidate cell; and
402, second signaling transmitted by the candidate cell is received.

It should be noted that FIG. 4 only schematically illustrates embodiment of this disclosure; however, this disclosure is not limited thereto. For example, an execution order among operations may be adjusted appropriately, other operations may be added, some operations may be removed, and objects of the operations may be adjusted. And appropriate variants may be made by those skilled in the art according to the above contents, without being limited to what is contained in FIG. 4.

Therefore, a serving cell enables to timely and effectively maintain a TA between the terminal equipment and the target cell according to second signaling by receiving the second signaling transmitted, according to first signaling, by the candidate cell, thereby avoiding a problem of delayed taking effect caused by inter-cell communication delay (a problem of erroneous determination on TA validity by the serving cell), and in addition, by maintaining the TA, avoiding a problem such as radio link failure that may occur during execution of a RACH-Less LTM.

In some embodiments, in 401, the first signaling transmitted to the candidate cell is similar to that in 301 above, and the above content is incorporated herein by reference and is not repeated here.

In some embodiments, in 402, the second signaling may include no information or may include any information. In this case, the first signaling only requests the candidate cell to feed back signaling, without concern for content carried by the second signaling. When the first signaling is existing signaling that requests the candidate cell to feed back the second signaling, the serving cell may update (calibrate) a first time of a first TAT maintained locally by the serving cell according to a time difference between transmission and reception of the signaling. Meanwhile, impact on an existing signaling interaction procedure is small, signaling overhead may be reduced, and problems existing in the related art are solved.

In some embodiments, in 402, the serving cell receives the second signaling transmitted by the candidate cell according to the first signaling. Information carried by the second signaling includes at least one of the following:
(21) second time of a second TAT, where the second TAT is maintained by the candidate cell, and the second time is a remaining time of the second TAT or an elapsed time of the second TAT;
(22) a difference between the second time in information (22) above and the first time in information (12) above; or
(23) an invalid value.

Accordingly, a serving cell may update a TA of a locally maintained first TAT according to information in the second signaling, so that the serving cell enables to timely and effectively maintain the TA, thereby avoiding a problem of delayed taking effect caused by inter-cell communication delay (a problem of erroneous determination on TA validity by the serving cell).

In some embodiments, for the above information (21), the second time of the second TAT is the valid duration of the TA of the terminal equipment that is maintained locally by the candidate cell relative to the candidate cell. The second time of the second TAT is similar to the first time of the first TAT maintained by the serving cell described above, and the above content is incorporated herein by reference and is not repeated here.

For the above information (22), in the case that the first signaling transmitted by the serving cell to the candidate cell includes the first time of the first TAT maintained locally by the serving cell, the candidate cell calculates a difference according to the second time of the second TAT maintained locally by the candidate cell and the first time of the first TAT, and transmits to the serving cell the second signaling including information related to the difference. For example, assume that the difference is a value obtained by subtracting the second time from the first time, or a value obtained by subtracting the first time from the second time. The difference indicates a delay time of TATs of the serving cell and the candidate cell. The information related to the difference is, for example, the difference, and in this case, the information related to the difference indicates a round-trip time (RTT) delay of communication backhaul. Alternatively, the information related to the difference is, for example, a half of the difference, and in this case, the information related to the difference indicates a one-way communication delay.

For the above information (23), when the candidate cell receives the first signaling transmitted by the serving cell, if the second TAT maintained locally by the candidate cell expires, the candidate cell considers that the TA of the terminal equipment relative to the candidate cell expires, and in this case, the second signaling fed back by the candidate cell to the serving cell includes information indicating that the TA is invalid, for example, an invalid value of the second time of the second TAT. Alternatively, if the candidate cell does not maintain a second TAT locally, the second signaling transmitted by the candidate cell to the serving cell indicates an invalid value.

In some embodiments, the second signaling transmitted by the candidate cell to the serving cell includes one piece of the above information (21) to (23), or at least two pieces of the above information (21) to (23). For example, the second signaling includes both the above information (21) and (22). Details are not described herein.

In some embodiments, taking the first signaling as LTM cell switch preparation signaling as an example, the above 401 and 402 are, for example, performed in the following manner: the serving cell selects one of the candidate cells as a target cell for LTM switch, transmits information (the first signaling) for preparing LTM switch to the target cell, and carries information related to the TA of the terminal equipment relative to the target cell, for example, the first time of the first TAT maintained locally by the serving cell between the terminal equipment and the target cell, such as a remaining time or an elapsed time; after receiving the LTM switch preparation message and the related TA information, the target cell feeds back to the serving cell switch-related information such as available time-frequency resources and allocated Preamble for the terminal equipment to access the target cell, and also includes the second time of the second TAT of the terminal equipment maintained in the target cell, or a difference between the second time of the second TAT maintained by the target cell and the first time of the first TAT maintained by the serving cell, such as an offset between the second time of the second TAT and the first time of the first TAT, where the offset is a backhaul deviation ΔRTT or a one-way deviation ΔDelay; after feeding back an LTM switch preparation signaling response (the second signaling) to the serving cell, the target cell releases the maintenance of the related TA.

In some embodiments, taking the first signaling as independent TAT calibration signaling as an example, the above 401 and 402 are, for example, performed in the following manner: the serving cell transmits a TAT valid time calibration request (the first signaling) to the candidate cell of the TA to obtain a delay of TAT validity, and the message carries a first duration state of the first TAT maintained locally by the serving cell between the terminal equipment and the candidate cell, such as a remaining duration or an elapsed duration; after receiving the TAT valid time calibration request message, the candidate cell feeds back TAT calibration information to the serving cell, and indicates an error between the second duration of the second TAT maintained by the candidate cell for the terminal equipment and the first duration of the first TAT maintained by the serving cell, such as an offset between remaining valid duration or elapsed duration of the TA maintained by the candidate cell and the serving cell; the offset is a backhaul deviation ΔRTT or a one-way deviation ΔDelay; after feeding back the TAT calibration information (the second signaling) to the serving cell, the candidate cell releases the maintenance of the related TA.

In the above embodiments, the candidate cell may be the target cell. After successfully receiving an early RACH from the terminal equipment, the LTM candidate cell calculates a TA value. After notifying the serving cell of the terminal equipment of the TA value and the second time of the related second TAT, the candidate cell does not immediately release the maintenance of the TA. The candidate cell starts a valid timer TAT, maintains the valid timer TAT of the TA, and sets a maintenance duration to T2 to prevent resource hang-up caused by problems such as inter-cell signaling loss. If the valid timer TAT expires, the candidate cell determines that the serving cell does not select the candidate cell as a target cell for LTM switch, or a link problem exists between the serving cell and the candidate cell and causes message reception failure. Therefore, the candidate cell no longer retains TA information related to the terminal equipment, and related storage and maintenance in the candidate cell are reset. For a candidate cell that no longer maintains TA information related to the terminal equipment, when the candidate cell receives a TAT valid time calibration request (the first signaling) transmitted by the serving cell, the candidate cell feeds back an invalid value of the second time of the second TAT, such as FFF. Alternatively, when the second TAT maintained locally by the candidate cell expires, the candidate cell considers that the TA is invalid. In such case, when the candidate cell receives a TAT valid time calibration request (the first signaling) transmitted by the serving cell, the candidate cell also feeds back an invalid value of the second time of the second TAT, such as FFF.

FIG. 5 is a schematic diagram of an information transceiving method according to embodiments of this disclosure. As shown in Fig. 5, the method is applied to a serving cell of a terminal equipment, the method including:
501, first signaling is transmitted to a candidate cell, the first signaling being used to request the candidate cell to transmit second signaling, and/or the first signaling including a first time of a first TAT (Time Alignment Timer) and/or a Timing Advance; the first TAT is maintained by the serving cell, the Timing Advance is a Timing Advance of the terminal equipment relative to the candidate cell, and the first time is a remaining time of the first TAT or an elapsed time of the first TAT;
502, second signaling transmitted by the candidate cell is received; and
503, the first time is updated according to the second signaling.

It should be noted that FIG. 5 only schematically illustrates embodiment of this disclosure; however, this disclosure is not limited thereto. For example, an execution order among operations may be adjusted appropriately, other operations may be added, some operations may be removed, and objects of the operations may be adjusted. And appropriate variants may be made by those skilled in the art according to the above contents, without being limited to what is contained in FIG. 5.

In some embodiments, the first signaling transmitted to the candidate cell in 501 is similar to that in 301 and 401 above, and the second signaling received from the candidate cell in 502 is similar to that in 402 above. The above content is incorporated herein by reference and is not repeated here.

In some embodiments, in 503, the serving cell updates the first time of the first TAT maintained locally according to the second signaling fed back by the candidate cell.

In some embodiments, when the first signaling is used to request the candidate cell to transmit the second signaling, the serving cell is able to update the first time according to a time difference between a time when the serving cell transmits the first signaling and a time when the serving cell receives the second signaling.

In some embodiments, when the first signaling is used to notify of TA-related information to the candidate cell or indicate TA-related information to the candidate cell, the candidate cell calculates an error between a value of the first TAT of the serving cell and a value of the second TAT of the candidate cell according to the information related to TA carried in the first signaling. Accordingly, the serving cell is able to update the first time according to the error in the second signaling.

In some embodiments, the serving cell updates the first time according to a difference between the second time included in the second signaling and the first time included in the first signaling; and/or
the serving cell updates the first time according to the difference included in the second signaling; and/or
the serving cell updates the first time according to a difference between a time when the second signaling is received and a time when the first signaling is transmitted; and/or
the serving cell updates the first time according to the second time and the difference included in the second signaling.

In some embodiments, when the first signaling is used to request the candidate cell to transmit second signaling and to notify the candidate cell of TA-related information or indicate TA-related information to the candidate cell, the candidate cell may calculate an error between a value of the first TAT of the serving cell and a value of the second TAT of the candidate cell according to the TA-related information in the first signaling. Meanwhile, the serving cell may also determine a time difference between a time when the serving cell transmits the first signaling and a time when the serving cell receives the second signaling. Accordingly, the serving cell is able to update the first time with reference to the error and/or the time difference.

In some embodiments, the first signaling is LTM cell switch notification signaling. The serving cell determines to trigger an LTM switch. After transmitting a cell switch command carried by a MAC CE to the terminal equipment, the serving cell transmits LTM cell switch notification signaling to a target cell. The signaling indicates, in addition to switch-related information such as a beamidx applied by the terminal equipment to access the target cell, information related to a timing advance of the terminal equipment configured in the target cell. The information includes a timing advance, and/or an initial value of a second TAT, and/or a second time of a second TAT, and/or a first time of a first TAT of the serving cell, and/or a difference between a second time of a second TAT configured in the target cell and a first time of a first TAT of the serving cell indicated in the information, such as an offset between the second time of the second TAT and the first time of the first TAT. The offset may be a backhaul deviation ΔRTT or a one-way deviation ΔDelay. The target cell configures/updates/ maintains TA-related content between the target cell and the user according to the information. Optionally, the target cell triggers uplink synchronization with the terminal equipment or transmits a Timing Advance Command (TAC) to the terminal equipment according to the configured/updated/maintained TA-related content. The TAC indicates the TA, and the TAC is carried by a MAC CE.

The specific procedure related to updating the first time is described in subsequent examples.

As described above, the first signaling transmitted by the serving cell to the candidate cell is used to request the candidate cell to transmit second signaling. The first signaling is, for example, existing signaling that enables the candidate cell to feed back signaling, such as Early RACH resource request signaling, measurement resource request signaling. The first signaling may also be signaling that includes a first time of a first TAT maintained locally by the terminal equipment and/or a TA of the terminal equipment relative to the candidate cell. In this case, the signaling may be new signaling different from existing signaling, or existing signaling carrying the above information. The first signaling may also be signaling that requests the candidate cell to transmit second signaling and includes the first time of the first TAT maintained locally by the terminal equipment and/or the TA of the terminal equipment relative to the candidate cell. The first signaling may also be signaling that indicates the candidate cell to configure the TA, a second TAT, and a second time of the second TAT. According to the above, the present application provides the following examples to illustrate the interaction procedure shown in FIG. 5 and specific modes of updating the first time corresponding to each interaction procedure for different first signaling and second signaling.

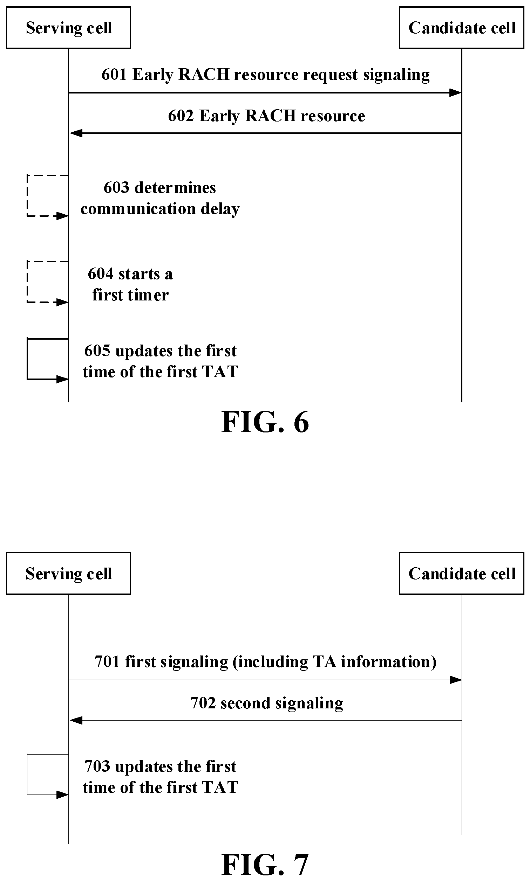

Example 1: The first signaling is Early RACH resource request signaling or measurement resource request signaling. Correspondingly, the second signaling is Early RACH resources or measurement resources fed back by the candidate cell. FIG. 6 is a schematic diagram of signaling according to embodiments of this disclosure. In FIG. 6, the first signaling is taken as Early RACH resource request signaling for example. Optionally, Early RACH resource request signaling may also be replaced with measurement resource request signaling (content shown in parentheses in FIG. 6).

As shown in Fig. 6, the method includes:
601, the serving cell transmits Early RACH resource request signaling (or measurement resource request signaling) to the candidate cell;
602, after receiving the Early RACH resource request signaling (or the measurement resource request signaling), the candidate cell feeds back Early RACH resources (or measurement resources) to the serving cell;
603, the serving cell determines a communication delay between the candidate cell and the serving cell according to the received Early RACH resources (or the measurement resources); and
604, the serving cell starts a first timer, an initial value of the first timer being t11; and
605, the serving cell updates the first time of the first TAT maintained locally according to the communication delay when needed.

In 603, the serving cell calculates a communication delay between the serving cell and the candidate cell according to a value t2 of the first timer when receiving the Early RACH resources (or measurement resources) and an initial value t1 of the first timer. For example, the communication delay may be an RRT delay of communication backhaul, i.e., a difference between t2 and t1; the communication delay may also be a one-way communication delay, i.e., one half of the difference between t2 and t1.

In 605, the serving cell updates the first time of the first TAT maintained locally according to the communication delay in 603 when needed. When the communication delay is an RRT delay of communication round trip, the updated first time is equal to the first time before update minus one half of the RRT delay of communication backhaul. When the communication delay is a one-way communication delay, the updated first time is equal to the first time before update minus the one-way communication delay.

Step 601 above corresponds to step 501, step 602 corresponds to step 502, and step 605 corresponds to step 503. The above content is incorporated herein and is not repeated here. Steps 604 and 603 may also be omitted from FIG. 6.

Thus, when the first signaling is existing signaling that requests the candidate cell to feed back the second signaling, the serving cell may update (calibrate) a first time of a first TAT maintained locally by the serving cell according to a time difference between transmission and reception of the signaling. Meanwhile, impact on an existing signaling interaction procedure is small, signaling overhead may be reduced, and problems existing in the related art are solved.

Example 2: The first signaling may also be signaling that includes a first time of a first TAT maintained locally by the terminal equipment and/or a TA of the terminal equipment relative to the candidate cell. Correspondingly, the second signaling is signaling including at least one of the following information:
(21) a second time of a second TAT, where the second TAT is maintained by the candidate cell, and the second time is a remaining time of the second TAT or an elapsed time of the second TAT;
(22) a difference between the second time in information (22) above and the first time in information (12) above; or
(23) an invalid value.

The content of the information (21) to (23) above is as described above, and the above content is incorporated herein and is not repeated here.

FIG. 7 is a schematic diagram of signaling according to embodiments of this disclosure; as shown in FIG. 7, the method includes:
701, the serving cell transmits first signaling to the candidate cell, the first signaling including a first time of a first TAT maintained locally by the terminal equipment and/or a TA of the terminal equipment relative to the candidate cell. Content related to the first signaling refers to the foregoing description.
702, the candidate cell feeds back second signaling to the serving cell; the second signaling includes at least one piece of the information (21) to (23) described above; and
703, the serving cell updates the first time of the first TAT maintained locally according to the information included in the second signaling.

Steps 701 to 703 above correspond to steps 501 to 503 respectively. The above content is incorporated herein and is not repeated here.

In 703, when the information included in the second signaling is a second time of a second TAT, the serving cell determines a communication delay between the serving cell and the candidate cell according to the second time in the second signaling and a value of the first time when the serving cell transmits the first signaling, and updates the first time of the first TAT according to the communication delay. The communication delay in 703 and the manner of updating the first time according to the communication delay are similar to those in 605, and the above content is incorporated herein.

In 703, when the information included in the second signaling is a difference between a second time of a second TAT of the candidate cell and the first time in the first signaling, the serving cell updates the first time of the first TAT according to the difference. The difference is similar to the communication delay described above.

In 703, when the information included in the second signaling is a second time of a second TAT of the candidate cell and the second time is an invalid value, the serving cell updates the first time of the first TAT according to the error, that is, the first time of the first TAT is also updated to an invalid value, indicating that the TA of the corresponding candidate cell for the terminal equipment is invalid; alternatively, the serving cell keeps the first TAT running and considers that the candidate cell does not maintain the related TA; alternatively, the serving cell calculates a communication delay according to a time of transmitting the first signaling and a time of receiving the second signaling, and updates the first time of the first TAT.

The communication delay in 703, the difference between the second time of the second TAT of the candidate cell and the first time in the first signaling, and the manner of updating the first time according to the communication delay are similar to those in 605, and the above content is incorporated herein.

Accordingly, a serving cell may update a TA of a first TAT maintained locally according to information in the second signaling, so that the serving cell enables to timely and effectively maintain the TA, thereby avoiding a problem of delayed taking effect caused by inter-cell communication delay (a problem of erroneous determination on TA validity by the serving cell).

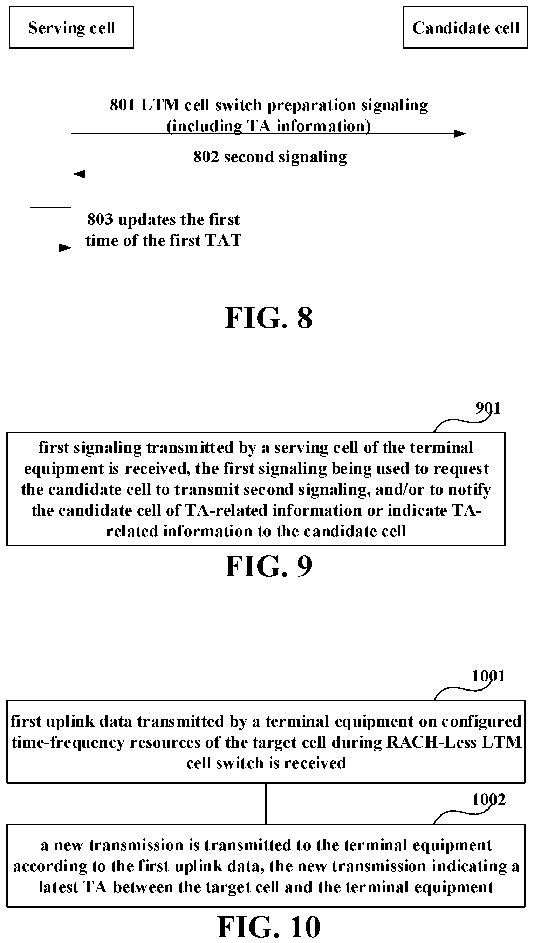

Example 3: The first signaling may also be signaling that requests the candidate cell to transmit second signaling and notifies the candidate cell of TA-related information or indicates the TA-related information to the candidate cell. For example, the first signaling is LTM cell switch preparation signaling, and the second signaling is a response to the LTM cell switch preparation signaling. FIG. 8 is a schematic diagram of signaling according to embodiments of this disclosure; in FIG. 8, the first signaling is LTM cell switch preparation signaling.

As shown in Fig. 8, the method includes:
801, the serving cell transmits LTM cell switch preparation signaling to the candidate cell, the LTM cell switch preparation signaling including TA information. Content related to the TA information and the LTM cell switch preparation signaling refers to the foregoing description;
802, the candidate cell feeds back second signaling to the serving cell, the second signaling including a ULGrant, a Preamble fed back by the candidate cell, and at least one piece of the information (21) to (23) described above; and
803, the serving cell updates the first time of the first TAT maintained locally according to at least one piece of the information (21) to (23) described above included in the second signaling.

Steps 801 to 803 above correspond to steps 501 to 503 respectively. The manner in which the serving cell updates the first time in 803 is similar to that in 703. The above content is incorporated herein and is not repeated here.

The serving cell transmits LTM cell switch notification signaling to the candidate cell. The LTM cell switch notification signaling includes the first time of the first TAT, and/or the TA of the terminal equipment relative to the candidate cell, and/or an initial value configuration of the second TAT of the candidate cell, and/or a configuration indicating the second time of the second TAT of the candidate cell. Content related to the LTM cell switch notification signaling refers to the foregoing description.

Thus, maintenance of the TA of the terminal equipment relative to the target cell is switched from the serving cell to the target cell, and the target cell continues to maintain the TA.

### Embodiments of a second aspect

Embodiments of the present application provide an information transceiving method applied to a candidate cell side of a terminal equipment, corresponding to the embodiments of the first aspect. Content different from the embodiments of the first aspect is described in detail, and content identical to the embodiments of the first aspect may refer to the embodiments of the first aspect, and is not repeated herein.

FIG. 9 is a schematic diagram of an information transceiving method according to embodiments of this disclosure, applied to a candidate cell; as shown in Fig. 9, the method includes:
901, first signaling transmitted by a serving cell of the terminal equipment is received,
wherein the first signaling is used to request the candidate cell to transmit second signaling, and/or to notify the candidate cell of TA-related (Timing Advance-related) information or indicate TA-related information to the candidate cell.

According to the above embodiments, through transmitting, by a serving cell of a terminal equipment, to a candidate cell a request, and/or TA information, the serving cell and/or a target cell are/is enabled to timely and effectively maintain a TA between the terminal equipment and the target cell, thereby avoiding a problem of delayed taking effect caused by inter-cell communication delay (a problem of erroneous determination on TA validity by the serving cell), and in addition, by maintaining the TA, avoiding a problem such as radio link failure that may occur during execution of a RACH-Less LTM.

In some embodiments, content carried by the first signaling may be at least one of the following:
- an indication for requesting the candidate cell to transmit the second signaling;
- a first time of a first TAT (Time Alignment Timer);
- and/ or an initial value of a second TAT (Time Alignment Timer);
- and/or a configuration of a second time of a second TAT (Timing Alignment Timer);
- and/or a timing advance (TA);
- and/or a difference being an offset between a configuration of the second time and the first time,
   the first TAT is maintained by the serving cell;
   the first time is a remaining time of the first TAT or an elapsed time of the first TAT;
   the second TAT is maintained by the candidate cell;
   the second time is a remaining time of the second TAT or an elapsed time of the second TAT.

The first signaling is as described in the embodiments of the first aspect and is not repeated herein.

In some embodiments, the method further includes (not shown):
the second signaling is transmitted to the serving cell according to the first signaling, wherein content carried by the second signaling includes at least one of the following:
- a second time of a second TAT, where the second TAT is maintained by the candidate cell, and the second time is a remaining time of the second TAT or an elapsed time of the second TAT;
- a difference between the second time and the first time; or
- an invalid value.

The second signaling above is as described in the embodiments of the first aspect, and the content thereof is incorporated herein and not repeated herein.

In some embodiments, the method further includes (not shown):
the timing advance obtained according to Early Rach (random access) is maintained and a TAT associated with the timing advance is maintained.

For example, after successfully receiving an early RACH from the terminal equipment, the LTM candidate cell calculates a TA value. After notifying the serving cell of the terminal equipment of the TA value and the second time of the related second TAT, the candidate cell does not immediately release the maintenance of the TA.

Accordingly, when the candidate cell receives the first signaling transmitted by the serving cell that includes the first time of the first TAT (Time Alignment Timer) and/or the Timing Advance, the candidate cell is fed back TA-related information, such that the serving cell and/or the target cell performs timely and effective maintenance of the TA between the terminal equipment and the target cell, thereby avoiding a problem of delayed taking effect caused by inter-cell communication delay (a problem of erroneous determination on TA validity by the serving cell).

In some embodiments, the method further includes (not shown):
the maintenance of the timing advance is released when the first signaling is not received beyond a preset time period, or after the second signaling is transmitted to the serving cell.

For example, after successfully receiving an early RACH from the terminal equipment, the LTM candidate cell calculates a TA value. After notifying the serving cell of the terminal equipment of the TA value and the second time of the related second TAT, the candidate cell does not immediately release the maintenance of the TA. The candidate cell starts a valid timer TAT, maintains the valid timer TAT of the TA, and sets a maintenance duration to T2 to prevent resource hang-up caused by problems such as inter-cell signaling loss. If the valid timer TAT expires, the candidate cell determines that the serving cell does not select the candidate cell as a target cell for LTM switch, or a link problem exists between the serving cell and the candidate cell and causes message reception failure. Therefore, the candidate cell no longer retains TA information related to the terminal equipment, and related storage and maintenance in the candidate cell are reset.

In some embodiments, the first signaling is LTM cell switch notification signaling or LTM cell switch signaling.

The first signaling, the LTM cell switch notification signaling, and the LTM cell switch signaling above are as described in the embodiments of the first aspect, and the content thereof is incorporated herein and not repeated herein.

In some embodiments, the method further includes (not shown):
the timing advance and the second time are configured/updated/maintained according to the first signaling.

For example, when the candidate cell receives the first signaling transmitted by the serving cell, it indicates that the serving cell selects the candidate cell as the target cell. In this case, if the target cell does not maintain TA information, the target cell configures a timing advance and a second time corresponding to the timing advance, to facilitate the target cell to maintain a TA of a terminal equipment relative to the target cell. If the target cell maintains TA information, the target cell updates/maintains the timing advance and the second time corresponding to the timing advance. The first signaling is, for example, LTM cell switch notification signaling.

In some embodiments, the method further includes (not shown): uplink synchronization with the terminal equipment is triggered and/or the timing advance is transmitted to the terminal equipment according to the timing advance and the second time. Thus, maintenance of the TA of the terminal equipment relative to the target cell is switched from the serving cell to the target cell, and the target cell continues to maintain the TA.

According to the above embodiments, when the candidate cell receives the first signaling transmitted by the serving cell that includes TA information such as the first time of the first TAT (Time Alignment Timer) and/or the Timing Advance, the candidate cell is fed back TA-related information, such that the serving cell and/or the target cell performs timely and effective maintenance of the TA between the terminal equipment and the target cell, thereby avoiding a problem of delayed taking effect caused by inter-cell communication delay (a problem of erroneous determination on TA validity by the serving cell).

### Embodiments of a third aspect

Currently, a serving cell before an LTM switch transmits a MAC CE to a terminal equipment, to indicate the terminal equipment to hand over to a target cell; the serving cell checks whether a TA of the terminal equipment relative to the target cell that is maintained locally by the serving cell is still within a valid time, and if invalid, a value of a Timing Advance Command (TAC) in the MAC CE is set to FFF, otherwise a value of a TAC is configured as a valid TA index. According to the configuration, the terminal equipment selects to skip a random access procedure, and directly accesses on a configured uplink reserved resource of a target cell, to perform a RACH-Less LTM serving cell switch.

The inventors find that after triggering a RACH-Less LTM switch, no network maintains the TA with the terminal equipment. If the TA between the terminal equipment performing the switch and the target cell of the switch expires or is not updated during the switch process, out-of-sync after the LTM switch and further radio link failure may be caused.

To address the above problem, the present application provides an information processing method applied to a target cell.

FIG. 10 is a schematic diagram of an information processing method according to embodiments of this disclosure. As shown in Fig. 10, the information processing method is applied to a target cell, the method including:
1001, first uplink data transmitted by a terminal equipment on configured time-frequency resources of the target cell during RACH-Less LTM cell switch is received; and
1002, a new transmission is transmitted to the terminal equipment according to the first uplink data, the new transmission indicating a latest timing advance (TA) between the target cell and the terminal equipment.

In some embodiments, the RACH-Less procedure in 1001 is similar to that in related art.

In some embodiments, in 1002, the TA is indicated by a Timing Advance Command (TAC), and the TAC is carried by a MAC CE.

Through the above embodiments, the RACH-Less based LTM switch procedure is supplemented. TA information between a user and a network is inserted into a first new downlink transmission indicating completion of LTM for the terminal equipment. The information is obtained by a new serving cell according to a first uplink transmission accessed by the user after the terminal equipment performs an LTM serving cell switch. The network and the terminal equipment obtain updated valid synchronization information, and a problem that no TA maintenance between the new serving cell and the terminal equipment exists after a RACH-Less LTM switch is avoided. A specific content of the first downlink transmission after completion of LTM is also provided. Accordingly, a problem that no network maintains the TA with the handover terminal equipment after triggering a RACH-Less LTM switch is avoided, and a problem that the TA between the handover terminal user and the handover target cell expires or is not updated during the switch process, as well as subsequent impacts such as radio link failure caused by out-of-sync after the LTM switch, are also avoided.

### Embodiments of a fourth aspect

At present, after a serving cell of a terminal equipment triggers an LTM cell switch, the serving cell transmits a corresponding MAC CE to the terminal equipment to indicate the terminal equipment to perform an LTM procedure, and transmits an LTM cell switch notification to the target cell. If a TA of the terminal equipment relative to the target cell is valid when the LTM switch is triggered, the terminal equipment performs uplink transmission directly on allocated time-frequency resources of the target cell in a RACH-Less mode; otherwise, the TA is considered as invalid or out of synchronization, and a random access procedure is performed on the target cell according to configuration indicated by a switch MAC CE in a RACH-Based mode to complete the LTM cell switch.

The inventors find that if the TA of the terminal equipment relative to the target cell expires during an LTM switch procedure, the LTM cell switch may fail, or out-of-sync between the terminal equipment and a new serving cell may occur soon even if the terminal equipment successfully switches to the target cell (the new serving cell). In such a case, the terminal equipment still needs to initiate a random access procedure to synchronize with the target cell acting (the new serving cell) again, which reduces efficiency of the LTM cell switch and wastes time-frequency resources.

To address the above problem, the present application provides an information processing method applied to a serving cell.

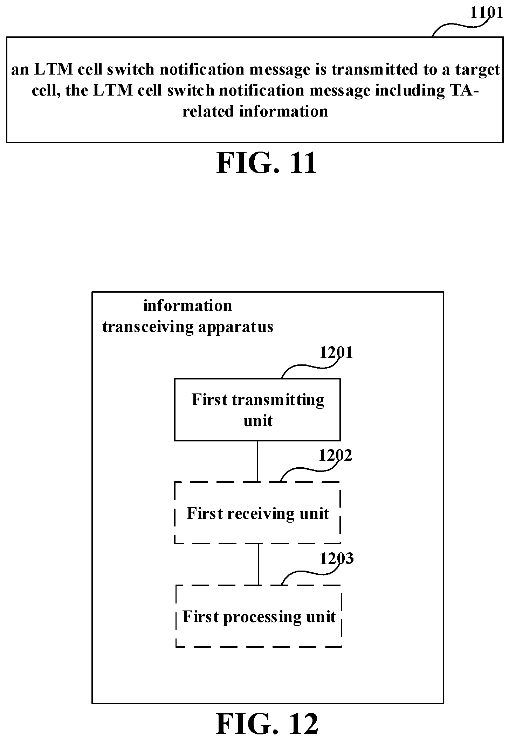

FIG. 11 is a schematic diagram of an information processing method according to embodiments of this disclosure. As shown in Fig. 11, the information processing method includes:
1101, an LTM cell switch notification message is transmitted to a target cell,
the LTM cell switch notification message including TA-related information; the TA-related information is information related to a TA of the terminal equipment relative to the target cell, for example, the TA between the terminal equipment and the target cell maintained by the serving cell, and/or information related to a first duration of a first TAT.

In some embodiments, the information related to the first duration of the first TAT includes the first time of the TA and/or an error, and the error includes an offset between a second time of a second TAT maintained by the target cell and the first time.

The TA, the first duration of the first TAT, the second duration of the second TAT, the error, and the offset above are as described in the embodiments of the first aspect, and the content thereof is incorporated herein and not repeated herein.

Through the above embodiments, when or after the serving cell determines to perform an LTM switch, the TA and TAT, which are locally maintained by the serving cell, between the terminal equipment to be switched and the switched target cell, are included in a message triggered for notifying a neighboring cell of the LTM cell switch, so that maintenance of the TA by the network is transferred from the original serving cell to the target cell. Accordingly, the TA and the TAT provide a reference for TA synchronization at the target cell and reduce a probability of cell switch failure.

### Embodiments of a fifth aspect

Embodiments of the present application provide an information transceiving apparatus applied to a serving cell. FIG. 12 is a schematic diagram of the information transceiving apparatus. The information transceiving apparatus is conceived based on the same inventive concept as the information transceiving method in the embodiments of the first aspect provided in the present application, and the principles for solving problems are similar. Therefore, for implementation of the information transceiving apparatus, reference is made to implementation of the information transceiving method in the embodiments of the first aspect provided in the present application, and repeated descriptions are not repeated herein. As used herein, the term "unit" or "module" refers to a combination of software and/or hardware that can implement a predetermined function. Although the system described in the following embodiments is preferably implemented in software, implementations in hardware, or a combination of software and hardware, are also possible and contemplated.

As shown in FIG. 12, an information transceiving apparatus includes:
a first transmitting unit 1201 configured to transmit first signaling to a candidate cell,
the first signaling being used to request the candidate cell to transmit second signaling, and/or to notify the candidate cell of TA-related (Timing Advance-related) information or indicate TA-related information to the candidate cell.

According to the above embodiments, through transmitting, by a serving cell of a terminal equipment, to a candidate cell a request, and/or a TA message, the serving cell and/or a target cell are/is enabled to timely and effectively maintain a TA between the terminal equipment and the target cell, thereby avoiding a problem of delayed taking effect caused by inter-cell communication delay (a problem of erroneous determination on TA validity by the serving cell), and in addition, by maintaining the TA, avoiding a problem such as radio link failure that may occur during execution of a RACH-Less LTM.

In some embodiments, the first signaling is as described in the embodiments of the first aspect and is not repeated herein.

In some embodiments, the apparatus further includes (as shown in the dashed box of FIG. 12):
a first receiving unit 1202 configured to receive the second signaling transmitted by the candidate cell, wherein content carried by the second signaling includes at least one of the following:
- a second time of a second TAT, where the second TAT is maintained by the candidate cell, and the second time is a remaining time of the second TAT or an elapsed time of the second TAT;
- a difference between the second time and the first time; or
- an invalid value.

In some embodiments, the second signaling is as described in the embodiments of the first aspect and is not repeated herein.

In some embodiments, the apparatus further includes (as shown in the dashed box of FIG. 12):
a first processing unit 1203 configured to update the first time according to the second signaling.

In some embodiments, the first signaling is LTM cell switch notification signaling or LTM cell switch signaling. The LTM cell switch notification signaling or LTM cell switch signaling includes content carried in the first signaling described above. The first signaling is as set forth above, and repeated descriptions are not provided herein.

According to the above embodiments, through transmitting, by a serving cell of a terminal equipment, to a candidate cell a request message, and/or a TA information indication/notification message, the serving cell and/or a target cell are/is enabled to timely and effectively maintain a TA between the terminal equipment and the target cell, thereby avoiding a problem of delayed taking effect caused by inter-cell communication delay (a problem of erroneous determination on TA validity by the serving cell), and in addition, by maintaining the TA, avoiding a problem such as radio link failure that may occur during execution of a RACH-Less LTM.

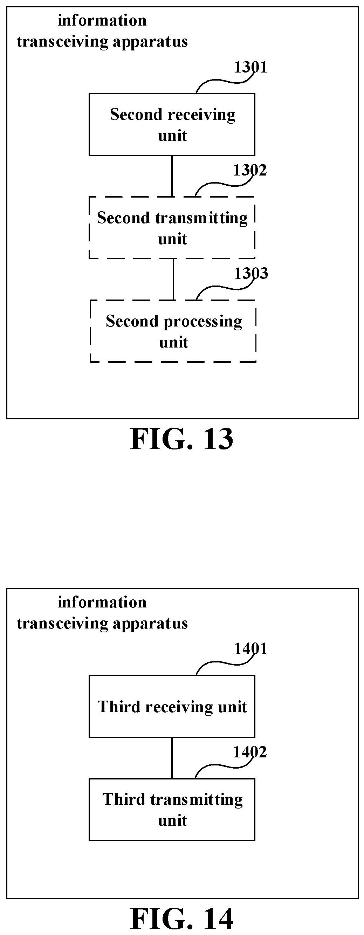

Embodiments of the present application further provide an information transceiving apparatus applied to a candidate cell. FIG. 13 is a schematic diagram of the information transceiving apparatus. The information transceiving apparatus is conceived based on the same inventive concept as the information transceiving method in the embodiments of the second aspect provided in the present application, and the principles for solving problems are similar. Therefore, for implementation of the information transceiving apparatus, reference is made to implementation of the information transceiving method in the embodiments of the second aspect provided in the present application, and repeated descriptions are not repeated herein. As used herein, the term "unit" or "module" refers to a combination of software and/or hardware that can implement a predetermined function. Although the system described in the following embodiments is preferably implemented in software, implementations in hardware, or a combination of software and hardware, are also possible and contemplated.

As shown in FIG. 13, an information transceiving apparatus includes:
a second receiving unit 1301 configured to receive first signaling transmitted by a serving cell of a terminal equipment,
the first signaling being used to request the candidate cell to transmit second signaling, and/or to notify the candidate cell of TA-related (Timing Advance-related) information or indicate TA-related information to the candidate cell.

In some embodiments, the apparatus further includes (as shown in the dashed box of FIG. 13):
a second transmitting unit 1302 configured to transmit the second signaling to the serving cell according to the first signaling, wherein content carried by the second signaling includes at least one of the following:
- a second time of a second TAT, where the second TAT is maintained by the candidate cell, and the second time is a remaining time of the second TAT or an elapsed time of the second TAT;
- a difference between the second time and the first time; or
- an invalid value.

In some embodiments, the apparatus further includes (as shown in the dashed box of FIG. 13):
a second processing unit 1303 configured to maintain the timing advance obtained according to Early Rach (random access) and maintain a TAT associated with the timing advance.

In some embodiments, the second processing unit 1303 is further configured to:
release the maintenance of the timing advance when the first signaling is not received beyond a preset time period, or after the second signaling is transmitted to the serving cell.

In some embodiments, the first signaling is LTM cell switch notification signaling or LTM cell switch preparation signaling. The LTM cell switch notification signaling or LTM cell switch signaling includes content carried in the first signaling described above. The first signaling is as set forth above, and repeated descriptions are not provided herein.

In some embodiments, the second processing unit 1303 is further configured to:
configure the timing advance and the second time according to the first signaling. The first signaling is, for example, LTM cell switch notification signaling.

According to the above embodiments, through transmitting, by a serving cell of a terminal equipment, to a candidate cell a request, and/or a TA message, the serving cell and/or a target cell are/is enabled to timely and effectively maintain a TA between the terminal equipment and the target cell, thereby avoiding a problem of delayed taking effect caused by inter-cell communication delay (a problem of erroneous determination on TA validity by the serving cell), and in addition, by maintaining the TA, avoiding a problem such as radio link failure that may occur during execution of a RACH-Less LTM.

Embodiments of the present application further provide an information transceiving apparatus applied to a target cell. FIG. 14 is a schematic diagram of the information transceiving apparatus. The information transceiving apparatus is conceived based on the same inventive concept as the information transceiving method in the embodiments of the third aspect provided in the present application, and the principles for solving problems are similar. Therefore, for implementation of the information transceiving apparatus, reference is made to implementation of the information transceiving method in the embodiments of the third aspect provided in the present application, and repeated descriptions are not repeated herein. As used herein, the term "unit" or "module" refers to a combination of software and/or hardware that can implement a predetermined function. Although the system described in the following embodiments is preferably implemented in software, implementations in hardware, or a combination of software and hardware, are also possible and contemplated.

As shown in FIG. 14, an information transceiving apparatus includes:
a third receiving unit 1401 configured to receive first uplink data transmitted by a terminal equipment on configured time-frequency resources of the target cell during RACH-Less LTM cell switch; and
a third transmitting unit 1402 configured to transmit a new transmission to the terminal equipment according to the first uplink data, the new transmission indicating a latest timing advance (TA) between the target cell and the terminal equipment.

In some embodiments, the TA is indicated by a Timing Advance Command (TAC), and the TAC is carried by a MAC CE.

Through the above embodiments, a problem that no network maintains the TA with the handover terminal equipment after triggering a RACH-Less LTM switch is avoided, and a problem that the TA between the handover terminal user and the handover target cell expires or is not updated during the switch process, as well as subsequent impacts such as radio link failure caused by out-of-sync after the LTM switch, are also avoided.

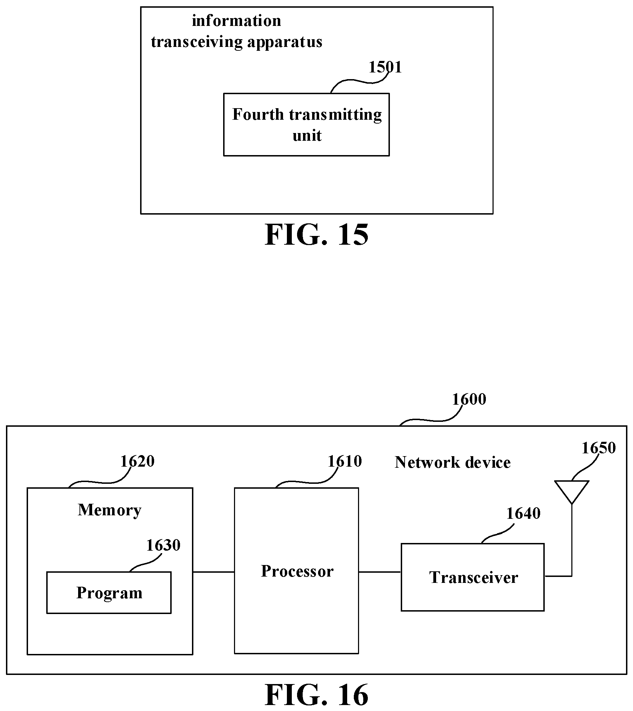

Embodiments of the present application further provide an information transceiving apparatus applied to a serving cell. FIG. 15 is a schematic diagram of the information transceiving apparatus. The information transceiving apparatus is conceived based on the same inventive concept as the information transceiving method in the embodiments of the fourth aspect provided in the present application, and the principles for solving problems are similar. Therefore, for implementation of the information transceiving apparatus, reference is made to implementation of the information transceiving method in the embodiments of the fourth aspect provided in the present application, and repeated descriptions are not repeated herein. As used herein, the term "unit" or "module" refers to a combination of software and/or hardware that can implement a predetermined function. Although the system described in the following embodiments is preferably implemented in software, implementations in hardware, or a combination of software and hardware, are also possible and contemplated.

As shown in FIG. 15, an information transceiving apparatus includes:
a fourth transmitting unit 1501 configured to transmit an LTM cell switch notification message to a target cell,
the LTM cell switch notification message includes a TA between a terminal equipment and the target cell maintained by the serving cell, and/or information related to a first duration of a first TAT.

In some embodiments, the information related to the first duration of the first TAT includes the first time of the TA and/or an error, and the error includes an offset between a second time of a second TAT maintained by the target cell and the first time.

The TA, the first duration of the first TAT, the second duration of the second TAT, the error, and the offset above are as described in the embodiments of the first aspect, and the content thereof is incorporated herein and not repeated herein.

Through the above embodiments, when or after the serving cell determines to perform an LTM switch, the TA and TAT, which are locally maintained by the serving cell, between the terminal equipment to be switched and switched the target cell, are included in a message triggered for notifying a neighboring cell of the LTM cell switch, so that maintenance of the TA by the network is transferred from the original serving cell to the target cell. Accordingly, the TA and the TAT provide a reference for TA synchronization at the target cell and reduce a probability of cell switch failure.

### Embodiments of a sixth aspect

Embodiments of this disclosure further provide a communications system, and reference may be made to FIG. 1, with contents identical to those in the embodiments of the first to the fifth aspects being not going to be described herein any further.

In some embodiments, a communications system 100 may at least include: a network device 101 and/or a terminal equipment 102.

A plurality of network devices 101 may be provided, where at least one network device corresponds to the serving cell of the present application, and at least one network device corresponds to the candidate cell or the target cell of the present application. The network device corresponding to the serving cell of the present application is configured to perform the information transceiving method of the first aspect and the fourth aspect of the present application. The network device corresponding to the candidate cell or the target cell of the present application is configured to perform the information transceiving method of the second aspect and the third aspect of the present application.

FIG. 16 is a schematic diagram of the composition of a network device according to embodiments of this disclosure. As shown in FIG. 16, a network device 1600 may include a processor 1610 (such as a central processing unit (CPU)) and a memory 1620, the memory 1620 being coupled to the processor 1610. The memory 1620 may store various data, and furthermore, it may store a program 1630 for information processing, and execute the program 1630 under control of the processor 1610.

For example, the processor 1610 may be configured to execute a program to carry out the information transceiving method as described in the embodiments of the first aspect to the fourth aspect.

Furthermore, as shown in FIG. 16, the network device 1600 may further include a transceiver 1640, and an antenna 1650, etc. Functions of the above components are similar to those in the related art, and shall not be described herein any further. It should be noted that the network device 1600 does not necessarily include all the parts shown in FIG. 16, and furthermore, the network device 1600 may include parts not shown in FIG. 16, and the related art may be referred to.

Embodiments of this disclosure provide a computer readable program, which, when executed in a network device, causes the network device to carry out the information transceiving method as described in the embodiments of the first aspect to the fourth aspect.

Embodiment of this disclosure provide a computer storage medium, including a computer readable program, which causes a network device to carry out the information transceiving method as described in the embodiments of the first aspect to the fourth aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory.

The methods/apparatuses described with reference to embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, an EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present invention. Various variants and modifications may be made by those skilled in the art according to the principle of the present invention, and such variants and modifications fall within the scope of the present invention.

As to implementations containing the above embodiments, following supplements are further disclosed.
1. A time alignment adjustment method, applied to a serving cell of a terminal equipment, the method including:
   transmitting first signaling to a candidate cell,
   receiving second signaling from the candidate cell, the second signaling being used to respond to the first signaling; and
   adjusting a timer for controlling a time duration during which the terminal equipment maintains uplink synchronization with the candidate cell.
2. The method according to supplement 1, wherein the first signaling is:
   - LTM switch preparation signaling,
   - and/or signaling for requesting Early RACH resources,
   - and/or signaling for requesting measurement resources.
3. The method according to supplement 1, wherein the second signaling is:
   - a response of LTM switch preparation signaling,
   - and/or a response of signaling for requesting Early RACH resources,
   - and/or a response of signaling for requesting measurement resources.

## Claims

1. An information transceiving apparatus, applied to a serving cell of a terminal equipment, comprising:
a first transmitting unit configured to transmit first signaling to a candidate cell,
wherein the first signaling is used to request the candidate cell to transmit second signaling, and/or to notify the candidate cell of TA-related (Timing Advance-related) information or indicate TA-related information to the candidate cell.

2. The apparatus according to claim 1, wherein content carried by the first signaling comprises at least one of the following:
an indication for requesting the second signaling;
a first time of a first TAT (Time Alignment Timer);
an initial value of a second TAT (Time Alignment Timer);
a configuration of a second time of a second TAT (Timing Alignment Timer);
a timing advance (TA); or
a difference being an offset between a configuration of a second time and a first time,
wherein the first TAT is maintained by the serving cell, the first time is a remaining time of the first TAT or an elapsed time of the first TAT, the second TAT is maintained by the candidate cell, the second time is a remaining time of the second TAT or an elapsed time of the second TAT, and the timing advance is a timing advance of the terminal equipment relative to the candidate cell.

3. The apparatus according to claim 2, wherein the configuration of the second time is the first time, or a value obtained by compensating the first time according to the difference.

4. The apparatus according to claim 1, wherein the apparatus further comprises:
a first receiving unit configured to receive the second signaling transmitted by the candidate cell, wherein content carried by the second signaling comprises:
a second time; and/or
a difference being a difference or an offset between a second time and a first time; and/or
an invalid value.

5. The apparatus according to claim 2, wherein,
the difference is a communication backhaul offset between the serving cell and the candidate cell, or a one-way communication delay offset between the serving cell and the candidate cell.

6. The apparatus according to claim 4, wherein the apparatus further comprises:
a first processing unit configured to update the first time according to the second signaling.

7. The apparatus according to claim 6, wherein the first processing unit is further configured to:
update the first time according to a difference between the second time included in the second signaling and the first time included in the first signaling; and/or
update the first time according to the difference included in the second signaling; and/or
update the first time according to a difference between a time when the second signaling is received and a time when the first signaling is transmitted; and/or
update the first time according to the second time and the difference included in the second signaling.

8. The apparatus according to claim 6, wherein the first processing unit is further configured to:
maintain operation of a first TAT and maintain timing of a first time according to an indication of an invalid value included in the second signaling, or update the first time according to a difference between a time when the second signaling is received and a time when the first signaling is transmitted.

9. The apparatus according to claim 1, wherein the first signaling is LTM (Layer1/Layer2 Triggered Mobility) cell switch preparation signaling and/or LTM cell switch notification signaling.

10. An information transceiving apparatus, applied to a candidate cell of a terminal equipment, comprising:
a second receiving unit configured to receive first signaling transmitted by a serving cell of the terminal equipment,
wherein the first signaling is used to request the candidate cell to transmit second signaling, and/or to notify the candidate cell of TA-related (Timing Advance-related) information or indicate TA-related information to the candidate cell.

11. The apparatus according to claim 10, wherein content carried by the first signaling comprises at least one of the following:
an indication for requesting the candidate cell to transmit the second signaling;
a first time of a first TAT (Time Alignment Timer);
an initial value of a second TAT (Time Alignment Timer);
a configuration of a second time of a second TAT (Timing Alignment Timer);
a timing advance (TA); or
a difference being an offset between a configuration of a second time and a first time,
wherein the first TAT is maintained by the serving cell, the first time is a remaining time of the first TAT or an elapsed time of the first TAT, the second TAT is maintained by the candidate cell, the second time is a remaining time of the second TAT or an elapsed time of the second TAT, and the timing advance is a timing advance of the terminal equipment relative to the candidate cell.

12. The apparatus according to claim 10, wherein the apparatus further comprises:
a second transmitting unit configured to transmit the second signaling to the serving cell according to the first signaling, wherein content carried by the second signaling comprises:
a second time; and/or
a difference being a difference or an offset between a second time a the first time; and/or
an invalid value.

13. The apparatus according to claim 11, wherein,
the difference is a communication backhaul offset between the serving cell and the candidate cell, or a one-way communication delay offset between the serving cell and the candidate cell.

14. The apparatus according to claim 10, wherein the apparatus further comprises:
a second processing unit configured to maintain a timing advance obtained according to Early Rach (random access) and maintain a TAT associated with the timing advance.

15. The apparatus according to claim 14, wherein the second processing unit is further configured to:
release maintenance of the timing advance and maintenance of the TAT associated with the timing advance when the first signaling is not received beyond a preset time, or after transmitting the second signaling to the serving cell.

16. The apparatus according to claim 11, wherein the second processing unit is further configured to:
configure/update/maintain the timing advance and the second time according to the content carried by the first signaling.

17. The apparatus according to claim 16, wherein the configuration of the second time comprises:
the first time indicated by the first signaling; and/or
a value obtained by compensating the first time indicated by the first signaling according to the difference indicated by the first signaling; and/or
a value obtained by compensating the first time indicated by the first signaling according to the difference estimated locally; and/or
the second time indicated by the first signaling.

18. The apparatus according to claim 16, wherein the second processing unit is further configured to:
trigger uplink synchronization with the terminal equipment and/or transmit the timing advance to the terminal equipment according to the timing advance and the second time.

19. An information transceiving apparatus, applied to a target cell of LTM (Layer1/Layer2 Triggered Mobility) cell switch, comprising:
a third receiving unit configured to receive first uplink data transmitted by a terminal equipment on configured time-frequency resources of the target cell when RACH-Less LTM cell switch; and
a third transmitting unit configured to transmit a new transmission to the terminal equipment according to the first uplink data, the new transmission indicating a timing advance (TA) between the target cell and the terminal equipment.

20. The apparatus according to claim 19, wherein the timing advance is indicated by a TAC (timing advance command), and the TAC is carried by a MAC CE (Medium Access Control Control Element).
